# FASCICULE DE BREVET EUROPEEN

(11) **EP 1 576 871 B1**
(45) Date de publication et mention de la délivrance du brevet: **29.08.2012**
(21) Numéro de dépôt: 05300188.9
(22) Date de dépôt: 16.03.2005
(51) Int. Cl.: A01G 23/06

(54) **Dispositif de pince pour l'arrachage de buissons**
Griffvorrichtung zum Ausreissen von Sträuchen
Gripping device for uprooting bushes

(30) Priorité: 19.03.2004 FR 0450554
(43) Date de publication de la demande: 21.09.2005
(73) Titulaire: JTA CHEZ VALENTIN Société à responsabilité limitée, 39460 FONCINE LE HAUT (FR)
(72) Inventeur: Gacon, Stéphane, 03130 St Léger sur Vouzance (FR); Jacquet, Jean-Charles, 39460 Foncine le Haut (FR)
(74) Mandataire: Rhein, Alain

(56) Documents cités:
- WO-A-96/33606
- FR-A- 2 822 021
- NL-A- 9 500 343
- US-A- 4 951 922
- US-A- 5 526 637
- US-A- 6 010 294

## Description

La présente invention a pour objet un dispositif de pince pour l'arrachage de buissons ou analogues.

Le développement des buissons constitue une gêne importante pour les éleveurs, du fait qu'il restreint la surface de pâture et limite le déplacement des animaux. Pour contrer ce développement on effectue des opérations de débroussaillage qui peuvent être réalisées selon diverses méthodes.

La plus courante consiste à couper les buissons au ras du sol, avec pour inconvénient une repousse très rapide de ces buissons, ce qui nécessite de fréquentes interventions.

Pour éviter ce problème de repousse, on procède à l'arrachage des buissons, au moyen d'un treuil par exemple, ce qui par contre peut nécessiter un matériel important, et génère un enlèvement de terre végétale préjudiciable à la repousse de l'herbe.

Il est également possible d'utiliser un traitement chimique, sur des zones limitées cependant, mais cette méthode est plus onéreuse et nécessite de prendre des précautions particulières.

Le broyage forestier est efficace même s'il n'empêche pas la repousse, par contre il est très onéreux du fait du matériel qu'il faut mettre en oeuvre.

Le défrichage par bulldozer est une technique encore plus onéreuse car nécessitant des moyens importants, et la repousse de l'herbe est très longue.

La méthode la plus efficace et la moins coûteuse consiste à arracher verticalement les buissons et à en enlever la terre. Toutefois, il n'existe pas actuellement de dispositif d'arrachage permettant d'atteindre cet objectif, et plus particulièrement de dispositif de pince permettant de saisir un buisson en vue de son arrachage.

On connaît déjà des dispositifs permettant d'arracher des souches, comme celui décrit dans le document FR 2.822.021, qui comprend un bras articulé de manutention équipé en extrémité d'un moyen de préhension comprenant deux mâchoires qui peuvent venir saisir un tronc ou une souche. Ce dispositif n'est toutefois pas adapté à l'arrachage de buissons, en effet le moyen de préhension est plutôt du type cisaille qui coupe plus qu'il n'arrache.

On connaît également, par le document WO 96/33606, un dispositif pour l'arrachage d'arbres, qui comporte en extrémité d'un bras articulé de manutention, une pince configurée pour lui permettre de saisir le tronc vertical d'un arbre. Ce dispositif est parfaitement adapté pour le saisissement d'un tronc, mais ne peut pas permettre de saisir un buisson.

Le document NL 9 500 343 décrit un dispositif similaire pour l'arrachage d'arbres, de la même manière, l'articulation de la pince et la forme des mords ne permettent pas de saisir efficacement un buisson.

La présente invention a pour but de remédier aux divers inconvénients précités, en proposant un dispositif de pince pour l'arrachage de buissons ou analogues, permettant un arrachage vertical puis le secouage du buisson arraché.

Le dispositif de pince pour l'arrachage de buissons ou analogues selon l'invention est du type comprenant un moyen de préhension disposé à l'extrémité d'un bras articulé de manutention, ledit moyen de préhension comportant au moins deux mâchoires mobiles de face active concave, aptes à se refermer sur une mâchoire fixe de face active convexe, tandis que la liaison dudit moyen de préhension avec ledit bras articulé de manutention est réalisée par l'intermédiaire de moyens de fixation selon un axe perpendiculaire à celui selon lequel s'articulent lesdites mâchoires mobiles, ce dispositif étant caractérisé par le fait que l'une desdites mâchoires mobiles est conçue apte à venir recouvrir l'autre pour venir se refermer également sur la même mâchoire fixe.

Les mâchoires mobiles sont ainsi articulées de part et d'autre de la mâchoire fixe, le recouvrement de l'une sur l'autre et sur la mâchoire fixe permettant d'éviter le cisaillement de la végétation.

La configuration des faces actives des mâchoires autorise la saisie des buissons, quelle que soit la section de ceux-ci et des branches qui les composent, ce qui est facilité par l'architecture des moyens de fixation qui permettent que les mâchoires évoluent parallèlement au sol.

Selon une caractéristique additionnelle du dispositif selon l'invention, la mâchoire fixe comprend deux mors longitudinaux séparés par une zone intermédiaire évidée, tandis que la mâchoire mobile comprend deux mors longitudinaux séparés par une zone intermédiaire évidée, la coopération de ladite mâchoire mobile avec la mâchoire fixe se faisant uniquement par l'intermédiaire desdits mors, lesdites zones intermédiaires venant au droit l'une de l'autre pour créer un dégagement.

Par ailleurs, les buissons présentent généralement une forme plutôt évasée vers le haut, aussi afin d'en permettre une saisie optimale, les deux mors de la mâchoire fixe et les mors des mâchoires mobiles sont conçus en sorte que, lors du serrage, il demeure entre les mors en regard un espace, et en ce que ledit espace est plus grand entre les mors supérieurs qu'entre les mors inférieurs.

Cette configuration permet de mieux saisir les buissons, sans risque de les sectionner.

Selon une autre caractéristique additionnelle du dispositif selon l'invention, les mors des mâchoires fixe et mobiles sont garnis de dents.

Selon une autre caractéristique additionnelle du dispositif selon l'invention, la mâchoire fixe comprend deux parties, dans le prolongement l'une de l'autre, chacune destinée à coopérer avec l'une des deux mâchoires mobiles.

Selon une autre caractéristique additionnelle du dispositif selon l'invention, les moyens de fixation permettant la liaison du moyen de préhension avec le bras articulé de manutention, comprennent deux arbres parallèles dont l'un permet le pivotement dudit moyen de préhension sur l'extrémité dudit bras articulé, tandis que l'autre est destiné au rattachement d'un vérin pour la réalisation dudit pivotement.

Les avantages et les caractéristiques du dispositif selon l'invention, ressortiront plus clairement de la description qui suit et qui se rapporte au dessin annexé, lequel en représente un mode de réalisation non limitatif.

Dans le dessin annexé:
- la figure 1 représente une vue schématique en perspective d'un dispositif de pince pour l'arrachage de buissons ou analogues selon l'invention, dans une certaine configuration.
- la figure 2 représente une vue schématique en perspective du même dispositif de pince dans une autre configuration.
- la figure 3 représente une vue schématique de dessus du même dispositif de pince dans la configuration de la figure 2.
- la figure 4 représente une vue schématique en coupe longitudinale du même dispositif de pince.

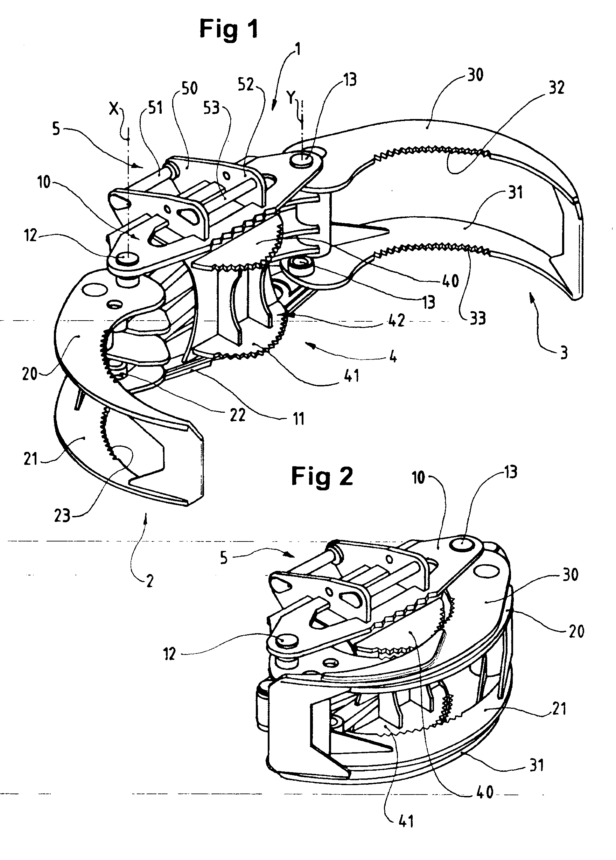

En référence à la figure 1, on peut voir qu'un dispositif de pince selon l'invention comprend un bâti 1 destiné à être solidarisé à l'extrémité d'un bras articulé de manutention, non représenté.

Le bâti 1 comprend essentiellement deux joues parallèles 10 et 11 entretoisées, sur lesquelles s'articulent deux mâchoires mobiles 2 et 3, par l'intermédiaire de pivots respectivement 12 et 13, selon deux axes X et Y.

Le bâti 1 porte également, entre les joues 10 et 11 ainsi qu'entre les axes X et Y, une mâchoire fixe 4 constituée essentiellement de deux plaques 40 et 41 accolées chacune à une joue, respectivement 10 et 11, et dont les tranches sont conformées pour présenter un profil convexe constituant des mors destinés à coopérer avec les mâchoires mobiles 2 et 3, tandis que l'espace 42 compris entre les deux plaques 40 et 41 est largement évidé.

Le bâti 1, et plus particulièrement la joue 10 qui constitue le dessus du bâti 1, porte des moyens 5 de fixation de l'extrémité du bras articulé de manutention, et qui consistent en d'une part une chape 50 portant un arbre transversal 51 disposé parallèlement à la joue 10, et sur lequel peut s'articuler le bras articulé de manutention, et d'autre part une chape 52 portant un arbre 53 parallèle à l'arbre 51, et destiné à la solidarisation de l'extrémité d'un vérin du bras articulé pour la mise en pivotement de la pince à l'extrémité de ce dernier.

Sur la figure 1, on peut voir également que la mâchoire 2 consiste en deux plaques parallèles 20 et 21 entretoisées, et découpées pour présenter, du côté destiné à coopérer avec la mâchoire fixe 4, un mors, respectivement 22 et 23, de profil concave.

La mâchoire 3 est construite sur le même modèle, elle comprend également deux plaques 30 et 31 parallèles et entretoisées, et découpées pour présenter un mors, respectivement 32 et 33, de profil concave, par contre elle est de dimensions légèrement supérieures à celles de la mâchoire 2, notamment en ce qui concerne la longueur d'entretoisement, en sorte de pouvoir recouvrir cette dernière et coopérer également avec la mâchoire fixe 4 comme cela est représenté sur la figure 2. Ainsi, sur la figure 2 on peut voir que la mâchoire 2 est refermée sur la mâchoire fixe 4, tandis que la mâchoire 3 recouvre la mâchoire 2, les plaques 30 et 31 venant se placer extérieurement contre les plaques 20 et 21.

Bien entendu le mécanisme permettant la mise en mouvement de mâchoires 2 et 3, de type à vérins hydrauliques, est prévu apte à créer un décalage lors de la fermeture et de l'ouverture des mâchoires 2 et 3 pour permettre le recouvrement.

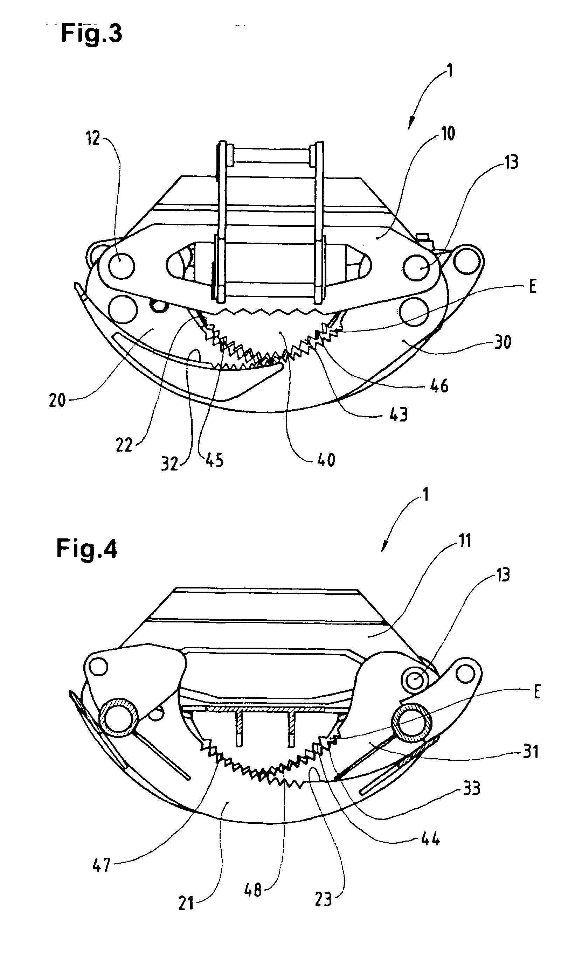

En référence à la figure 3, on peut de quelle manière les plaques 20 et 30 des mâchoires, respectivement 2 et 3, coopèrent avec la plaque 40 de la mâchoire 4 et, sur la figure 4, de quelle manière les plaques 21 et 31 coopèrent avec la plaque 41.

On peut constater, dans le mode de réalisation représenté, que les mors 22 et 32, et 23 et 33, sont de rayon de courbure supérieur à celui des tranches 43 et 44 des plaques, respectivement 40 et 41, et qui constituent les mors de ces dernières. Ainsi, il n'y a qu'une partie 45 du mors 43 qui coopère avec le mors 22, tandis que l'autre partie 46 coopère avec le mors 32, et il n'y a qu'une partie 47 du mors 44 qui coopère avec le mors 23, tandis que l'autre partie 48 coopère avec le mors 33.

On notera qu'il est bien entendu possible de prévoir que la mâchoire mobile qui se referme en premier, en l'occurrence la mâchoire 2, puisse présenter des mors 22 et 23 dont le rayon de courbure est équivalent à celui des mors 43 et 44 de la mâchoire fixe 4, en sorte d'obtenir une parfaite coopération.

Quel que soit le mode de réalisation, les parties distales des mâchoires 2 et 3 permettent de rassembler la végétation tandis leurs parties proximales et/ou médianes, qui coopèrent avec les mors 43 et 44, sont destinées à serrer cette végétation sans la couper.

On notera par ailleurs, comme cela est parfaitement visible sur les figures 3 et 4, qu'en position de serrage, les mors des mâchoires mobiles 2 et 3 ne rentrent pas en contact avec les mors de la mâchoire fixe 4. En effet, outre un décalage dans le sens de la hauteur du fait de la pénétration de la mâchoire 2 entre les plaques 30 et 31 de la mâchoire 3, il subsiste un espace E entre les mors en regard. Il est de plus à noter que cet espace E est plus important entre le mors 43 et les mors 22 et 32, qu'entre le mors 44 et les mors 23 et 33, ceci afin de compenser la différence de densité entre le haut et le bas d'un buisson qui présente une forme évasée vers le haut.

L'architecture des moyens de fixation 5 autorise une évolution des mâchoires 2 et 3 parallèlement au sol, quelle que soit la configuration de celui-ci, de plus en agissant sur le vérin de mise en pivotement de la pince, on peut secouer le buisson arraché pour en faire tomber la terre.

La végétation est donc saisie en deux régions espacées, à savoir entre d'une part les plaques 20 et 30, et la plaque 40, et d'autre part les plaques 21 et 31, et la plaque 41, ce qui permet un meilleur accrochage pour l'opération d'arrachage.

## Revendications

1. Dispositif de pince pour l'arrachage de buissons ou analogues, du type comprenant un moyen de préhension disposé à l'extrémité d'un bras articulé de manutention, ledit moyen de préhension comportant au moins deux mâchoires mobiles (2, 3) de face active concave, aptes à se refermer sur une mâchoire fixe (4) de face active convexe, tandis que la liaison dudit moyen de préhension avec ledit bras articulé de manutention est réalisée par l'intermédiaire de moyens de fixation (5) selon un axe perpendiculaire à celui selon lequel s'articulent lesdites mâchoires mobiles (2, 3), **caractérisé par le fait que** l'une (3) desdites mâchoires mobiles est conçue apte a venir recouvrir l'autre (2) pour venir se refermer également sur la même mâchoire fixe (4).

2. Dispositif selon la revendication 1, **caractérisé en ce que** la mâchoire fixe (4) comprend deux parties (45, 47, 46, 48), dans le prolongement l'une de l'autre, chacune destinée à coopérer avec l'une des deux mâchoires mobiles (2, 3).

3. Dispositif selon l'une des revendications 1 ou 2, **caractérisé en ce que** la mâchoire fixe (4) comprend deux mors (43, 44) longitudinaux séparés par une zone intermédiaire évidée (42), tandis que la mâchoire mobile (2, 3) comprend deux mors longitudinaux (22, 23, 32, 33) séparés par une zone intermédiaire évidée, la coopération de ladite mâchoire mobile (2, 3) avec la mâchoire fixe (4) se faisant uniquement par l'intermédiaire desdits mors (43, 44, 22, 23, 32, 33), lesdites zones intermédiaires venant au droit l'une de l'autre pour créer un dégagement.

4. Dispositif selon la revendication 3, **caractérisé en ce que** les deux mors (43, 44) de la mâchoire fixe (4) et les mors (22, 23, 32, 33) des mâchoires mobiles (2, 3) sont conçus en sorte que, lors du serrage, il demeure entre les mors (43, 44, 22, 23, 32, 33) en regard un espace (E).

5. Dispositif selon la revendication 4, **caractérisé en ce que** l'espace (E) est plus grand entre les mors (43, 22, 32) destinés à saisir le haut d'un buisson qu'entre les mors (43, 22, 32) destinés à saisir le bas dudit buisson.

6. Dispositif selon l'une quelconque des revendications précédentes, **caractérisé en ce que** les mors (43, 44, 22, 23, 32, 33) des mâchoires fixe (4) et mobiles (2, 3) sont garnis de dents.

7. Dispositif selon l'une quelconque des revendications précédentes, **caractérisé en ce que** les moyens de fixation (5) permettant liaison du moyen de préhension avec le bras articulé de manutention, comprennent deux arbres parallèles (51, 53) dont l'un (51) permet le pivotement dudit moyen de préhension sur l'extrémité dudit bras articulé, tandis que l'autre (53) est destiné au rattachement d'un vérin pour la réalisation dudit pivotement.

## Claims

1. Gripping device for uprooting bushes or the like, of the type comprising gripping means arranged at the end of a hinged handling arm, said gripping means including at least two movable jaws (2, 3) with a concave active face, capable of closing onto a fixed jaw (4) with a convex active face, while the connection of said gripping means to said hinged handling arm is carried out through fastening means (5) according to an axis perpendicular to the one according to which said movable jaws (2, 3) are hinged, **characterised in that** one (3) of said movable jaw is designed capable of overlapping the other one (2), in order to also close onto the same fixed jaw (4).

2. Device according to claim 1, **characterised in that** the fixed jaw (4) comprises two parts (45, 47, 46, 48) in the extension of each other, each one aimed at cooperating with one of the two movable jaws (2, 3).

3. Device according to one of claims 1 or 2, **characterised in that** the fixed jaw (4) comprises two longitudinal chucks (43, 44) separated by a recessed intermediate area (42), while the movable jaw (2, 3) comprises two longitudinal chucks (22, 23, 32, 33) separated by a recessed intermediate area, the cooperation of said movable jaw (2, 3) with the fixed jaw (4) occurring only through said chucks (43, 44, 22, 23, 32, 33), said intermediate areas arriving in front of each other for creating a free space.

4. Device according to claim 3, **characterised in that** the two chucks (43, 44) of the fixed jaw (4) and the chucks (22, 23, 32, 33) of the movable jaw (2, 3) are designed so that during the clamping a space (8) remains between the chucks (43, 44, 22, 23, 32, 33) facing each other.

5. Device according to claim 4, **characterised in that** the space (8) is larger between the chucks (43, 22, 32) aimed at gripping the top of a bush than between the chucks (43, 22, 32) aimed at gripping the bottom of said bush.

6. Device according to any of the preceding claims, **characterised in that** the chucks (43, 44, 22, 23, 32, 33) of the fixed (4) and movable (2, 3) jaws are provided with teeth.

7. Device according to any of the preceding claims, **characterised in that** the fastening means (5) permitting the connection of the gripping means to the hinged handling arm comprise two parallel shafts (51, 53), one of which permits the pivoting of said gripping means on the end of said hinged arm, while the other one (53) is for the connection of a jack for performing said pivoting.

## Patentansprüche

1. Griffvorrichtung zum Ausreißen von Sträuchern oder dergleichen, der Art umfassend ein am Ende eines gelenkigen Betätigungsarmes angeordnetes Greifmittel, wobei das besagte Greifmittel wenigstens zwei bewegliche Backen (2, 3) mit einer konkaven Wirkfläche umfasst, die geeignet ist, gegen eine feste Backe (4) mit einer konvexen Wirkfläche zu schließen, während die Verbindung des besagten Greifmittels mit dem gelenkigen Betätigungsarm über Befestigungsmittel (5) gemäß einer Achse, die senkrecht zu derjenigen, gemäß der die besagten Backen (2, 3) gelenkig sind, erfolgt, **dadurch gekennzeichnet, dass** eine (3) der besagten beweglichen Backen derart ausgestaltet ist, dass sie geeignet ist, um die andere (2) zu überdecken, um also gegen dieselbe feste Backe (4) zu schließen.

2. Vorrichtung nach Anspruch 1, **dadurch gekennzeichnet, dass** die feste Backe (4) zwei Teile (45, 47, 46, 48) in der Verlängerung von einander umfasst, wobei jedes dazu bestimmt ist, mit einer der zwei beweglichen Backen (2, 3) zusammenzuwirken.

3. Vorrichtung nach einem der Ansprüche 1 oder 2, **dadurch gekennzeichnet, dass** die feste Backe (4) zwei durch eine ausgehöhlte Zwischenzone (42) getrennte Längsbacken (43, 44) umfasst, während die bewegliche Backe (2, 3) zwei durch eine ausgehöhlte Zwischenzone getrennte Längsspannbacken (22, 23, 32, 33) umfasst, wobei die Zusammenwirkung der besagten beweglichen Backe (2, 3) mit der festen Backe (4) nur über die besagten Spannbacken (43, 44, 22, 23, 32, 33) erfolgt, wobei die besagten Zwischenzonen gegenüber einander gelangen, um einen Freiraum zu bilden.

4. Vorrichtung nach Anspruch 3, **dadurch gekennzeichnet, dass** die zwei Spannbacken (43, 44) der festen Backe (4) und die Spannbacken (22, 23, 32, 33) der beweglichen Backe (2, 3) so ausgestaltet sind, dass während dem Klemmen ein Raum (8) zwischen den einander gegenüberliegenden Spannbacken (43, 44, 22, 23, 32, 33) verbleibt.

5. Vorrichtung nach Anspruch 4, **dadurch gekennzeichnet, dass** der Raum (8) größer ist zwischen den zum Greifen des oberen Teils eines Strauches bestimmten Spannbacken (43, 22, 32) als zwischen den zum Greifen des unteren Teils des besagten Strauches bestimmten Spannbacken (43, 22, 32).

6. Vorrichtung nach irgendeinem der vorgehenden Ansprüche, **dadurch gekennzeichnet, dass** die Spannbacken (43, 44, 22, 23, 32, 33) der festen (4) und beweglichen (2, 3) Backen mit Zähnen versehen sind.

7. Vorrichtung nach irgendeinem der vorgehenden Ansprüche, **dadurch gekennzeichnet, dass** die Befestigungsmittel (5), die die Verbindung des Greifmittels mit dem gelenkigen Betätigungsarm ermöglichen, zwei parallele Wellen (51, 53) umfassen, wovon die eine (51) die Verschwenkung des besagten Greifmittels am Ende des besagten Betätigungsarmes ermöglicht, während die andere (53) zum Verbinden einer Winde zum Durchführen der Verschwenkung bestimmt ist.
